# EUROPÄISCHE PATENTSCHRIFT

(11) **EP 1 463 661 B1**
(45) Veröffentlichungstag und Bekanntmachung des Hinweises auf die Patenterteilung: **30.08.2006**
(21) Anmeldenummer: 02792981.9
(22) Anmeldetag: 12.12.2002
(51) Int. Cl.: B62D 5/065, B62D 6/02

(54) **SERVOLENKSYSTEM FÜR FAHRZEUGE**
SERVO STEERING SYSTEM FOR MOTOR VEHICLES
SYSTEME DE DIRECTION ASSISTEE DESTINE A DES VEHICULES

(30) Priorität: 03.01.2002 DE 10200092
(43) Veröffentlichungstag der Anmeldung: 06.10.2004
(73) Patentinhaber: ZF Lenksysteme GmbH, 73527 Schwäbisch Gmünd (DE)
(72) Erfinder: REUTER, Wolfgang, 61197 Florstadt (DE); SCHMID, Johannes, 73527 Schwäbisch Gmünd (DE)
(86) Internationale Anmeldenummer: PCT/EP2002/014112
(87) Internationale Veröffentlichungsnummer: WO 2003/055733

(56) Entgegenhaltungen:
- EP-A- 1 149 755
- EP-B- 0 189 965
- DE-A- 3 729 156

## Beschreibung

Die Erfindung betrifft ein Servolenksystem für Fahrzeuge, insbesondere Personenkraftwagen, gemäß dem Oberbegriff des Anspruches 1.

An Servolenksysteme werden mit zunehmenden Komfortansprüchen, aber auch unter dem Gesichtspunkt der wechselseitigen Beeinflussung durch anderweitige Fahrdynamiksysteme immer höhere Ansprüche gestellt.. Dementsprechend soll die jeweilige, teils recht hohe Servounterstützung auch in Extremsituationen gewährleistet sein, in denen Veränderungen des gewohnten Lenkverhaltens, auch in Bezug auf die Reaktion des Fahrers, besonders kritisch sind. Die dadurch bedingte ständige Abrufbarkeit auch großer Volumenströme setzt große Pumpenleistungen voraus, die die anderweitig nutzbare Motorleistung reduzieren und den Kraftstoffverbrauch erhöhen.

Um dem zu begegnen, vor allem aber, um das Lenkgefühl zu verbessern, wird bei der DE 37 29 156 C2 in der Verbindung der Pumpe zum Servosteller, deren Vor- und Rücklauf als Bypass verbindend, eine Ventilanordnung vorgesehen, die in Abhängigkeit von für die erforderliche Servounterstützung maßgeblichen Parametern, wie vom Fahrer am Lenkrad aufgebrachtem Drehmoment, Lenkraddrehwinkel, Fahrgeschwindigkeit, auf den Servosteller wirkendem Druck und dergleichen die Anteile des Fördervolumens der Pumpe bestimmen, die als genutzter Volumenanteil (Nutzleistung) dem Servosteller zugeführt oder als ungenutzter. Volumenanteil (Verlustleistung) unmittelbar auf den Rücklauf zurückgeführt werden.

Die im Bypass liegende Ventilanordnung ist als Schieberventil ausgebildet, dessen Schieber druckausgeglichen und überlagert zur Federbelastung auf seine Öffnungsstellung über einen Stellmagneten beaufschlagbar ist, über den der Schieber bestromungsabhängig, angesteuert über das Steuergerät, in Richtung auf seine den Überströmquerschnitt absteuernde Sperrlage verstellbar ist.

Des weiteren ist ein Servolenksystem der eingangs genannten Art aus der EP 0 189 965 B1 bekannt, bei dem im Übergang von der dort als Konstantpumpe ausgebildeten Lenkhelfpumpe zum Servosteller und zum Rücklauf ein 3-Wege-Stromventil liegt, das den dem Servosteller zugeführten Anteil des Fördervolumens der Pumpe als genutzten Anteil über eine Verstelldrossel steuert, die über einen Magnetsteller in Abhängigkeit von für die Servowirkung maßgeblichen Parametern, wie Fahrgeschwindigkeit, Drehwinkel des Lenkrades und dergleichen in ihrem Drosselquerschnitt einstellbar ist. Die Größe des über den Querschnitt der Verstelldrossel laufenden Volumenstromes, bzw. der korrespondierend zu diesem Drosselquerschnitt sich einstellenden Druckdifferenz wird zur Bestimmung des Überström- oder Durchflutungsquerschnittes zum Rücklauf genutzt. Dieser wird über einen als Druckwaage ausgebildeten Regelkolben bestimmt, der einerseits vom zulaufseitig auf die Verstelldrossel gegebenen Druck, und andererseits vom ablaufseitig zur Verstelldrossel gegebenen Druck, ergänzt durch eine Kompensationsfeder als Stellelement, beaufschlagt ist.

Bedingt durch diesen Aufbau ergeben sich ungeachtet der Größe des Öffnungsquerschnittes der Verstelldrossel, die gleichzeitig eine Messdrossel bildet, bezogen auf den dem Servosteller zugeführten Anteil des Fördervolumens der Pumpe Drosselverluste, da die Ausgestaltung als Verstelldrossel zu gewissen Querschnittsbegrenzungen führt. Insbesondere bezogen auf kleine Drosselquerschnitte für den Betrieb der Lenkung mit geringer Servounterstützung ergeben sich hierdurch Wirkungsgradeinbußen. Weiter bedingt ein derartiges System, dass auf Grund der Ansteuerung über das Steuergerät und den Magnetsteller sich an der Verstelldrossel in ihrer Funktion als Messdrossel jeweils entsprechende Druckdifferenzen eingestellt haben, bevor über den als Druckwaage ausgebildeten Regelkolben der freie Querschnitt auf den Rücklauf entsprechend eingestellt werden kann.

Der Erfindung liegt die Aufgabe zu Grunde, ein Servolenksystem der eingangs genannten Art im Hinblick auf die Verbesserung des Wirkungsgrades und/oder des zeitlichen Ansprechverhaltens, und damit auch des Lenkgefühles, zu verbessern und/oder gegen Druckschwankungen, die von der Lenkung herrühren, resistent zu machen, so dass sich ein robustes System ergibt.

Erreicht wird dies mit den Merkmalen des Anspruches 1, wobei als Messdrossel eine Festdrossel vorgesehen wird, die im Querschnitt so groß bemessen werden kann, dass bezogen auf die Betriebsbereiche, in denen im Regelfall überwiegend gearbeitet wird und in denen nur eine geringe Servounterstützung gefordert wird, in denen also über die Messdrossel nur ein geringer Volumenstrom fließt, nur geringfügige Drosselverluste anfallen. Ferner auch dadurch, dass das Stellelement in seiner Stellkraft volumenstromvariierend aktiv veränderlich ist, so dass überlagernd zur volumenstromabhängigen, über die Druckwaage, insbesondere über einen Regelkolben als Druckwaage erfolgenden Einstellung des Öffnungsquerschnittes der Ablaufdrossel als Überströmquerschnitt, dieser Öffnungsquerschnitt aktiv veränderlich ist, wobei hierfür im Rahmen der Erfindung insbesondere ein bestromungsabhängig verstellbares Stellglied vorgesehen sein kann. Insbesondere ist ein derartiges Stellglied - als Kraftsteller - durch einen Magnetsteller gebildet, über den die Druckwaage, bzw. der die Druckwaage bildende Regelkolben direkt oder indirekt beaufschlagbar ist, wobei die jeweilige, über den Magnetsteller aufgebrachte Stellkraft eine kurzzeitige Verstimmung der Druckwaage zur Folge hat, bis sich durch die Änderung des Volumenstromes das in Berücksichtigung der Stellkraft des Magnetstellers aufzubauende Druckgleichgewicht gebildet hat.

Als besonders zweckmäßig erweist es sich im Rahmen der Erfindung, als Stellelement einen Kraftsteller, insbesondere einen Magnetsteller in Parallelschaltung zu einer Feder vorzusehen. Selbstverständlich ist es aber auch möglich, als Stellelement zwei Stellglieder, insbesondere einen Wegsteller, z. B. einen Spindelsteller, und eine Feder in Reihenschaltung anzuordnen, beispielsweise dadurch, dass der Spindelsteller über die Feder gegen den Kolben abgestützt ist, wobei der den Öffnungsquerschnitt bestimmende Stellweg von der in Gegenrichtung wirkenden Gegenkraft abhängig ist.

Die aktiv veränderliche Beaufschlagung der Druckwaage, bzw. des die Druckwaage bildenden Regelkolbens erweist sich insbesondere auch als zweckmäßig, um überlagernd zu üblicherweise die Servowirkung bestimmenden Parametern dann einzugreifen, wenn dies im Hinblick auf fahrdynamische Unregelmäßigkeiten zweckmäßig ist und besonders kurze Reaktionszeiten gefordert sind.

Die Erfindung kann sowohl in Verbindung mit Konstantpumpen wie auch Verstellpumpen eingesetzt werden, wobei in der Kombination Verstellpumpe und Regelung der Verstellpumpe über die Druckwaage eine besonders zweckmäßige und energiesparende Lösung liegt.

Weitere Einzelheiten und Merkmale der Erfindung ergeben sich aus den Unteransprüchen. Ferner wird die Erfindung nachstehend anhand zweier stark vereinfachter Darstellungen des hydraulischen Teiles eines Servolenksystemes erläutert, wobei
- Fig. 1: eine Lösung mit Konstantpumpe,
- Fig. 2: eine Lösung mit Verstellpumpe, und
- Fig. 3 und 4: verschiedene Stellungen einer in der Ansteuerung für die Verstellpumpe liegenden, als Ablaufdrossel arbeitenden Druckwaage zeigen.

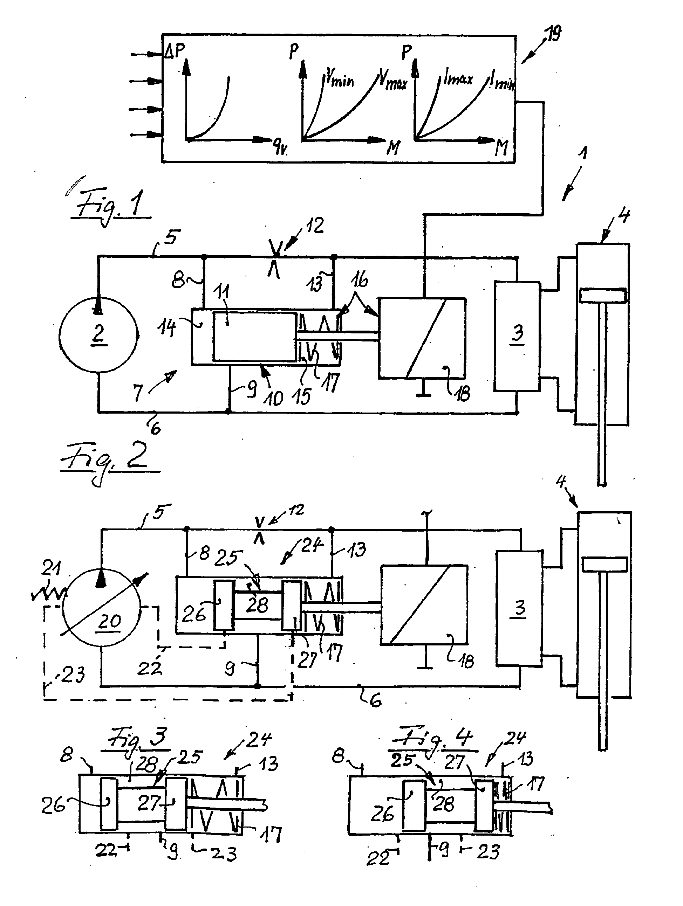

Der in Fig. 1 dargestellte Hydraulikkreis 1 umfasst eine Konstantpumpe 2 als Lenkhelfpumpe, die über ein Lenkventil 3 auf einem Servosteller 4 arbeitet, der symbolisch als Hydrozylinder dargestellt ist und auf das Lenkgestänge der lenkbaren Räder wirkt.

Der Hydraulikkreis 1 umfasst in der Leitungsverbindung von der Konstantpumpe 2 zum Lenkventil 3 eine hochdruckseitige Vorlaufleitung 5 und eine niederdruckseitige Rücklaufleitung 6 sowie, diese verbindend, einen Bypass 7, in dem, über Leitungsabschnitte 8 und 9 angeschlossen, eine in ihrem Drosselquerschnitt variable Ablaufdrossel 10 liegt. Diese ist konstruktiv in Form eines Schieberventiles aufgebaut, dessen Kolben 11 stellungsabhängig die Größe des variablen Drossel- bzw. Überströmquerschnittes bestimmt.

In der Vorlaufleitung 5 ist eine Messdrossel 12 angeordnet, und der Leitungsabschnitt 8 des Bypasses 7 zweigt zulaufseitig, also stromauf der Messdrossel 12 von der Vorlaufleitung 5 ab. Ablaufseitig, also stromab der Messdrossel 12 zweigt eine Leitung 13 von der Vorlaufleitung 5 ab und mündet seitens der Ablaufdrossel 10 rückseitig zum Kolben 11 auf diese aus, so dass der Kolben 11 zwischen den Druckräumen 14 und 15 liegt und eine Druckwaage bildet, die im schematisch dargestellten Ausführungsbeispiel rückseitig zusätzlich über ein Stellelement 16 beaufschlagt ist.

Das Stellelement 16 umfasst im Ausführungsbeispiel zwei Stellglieder 17 und 18, von denen das Stellglied 17 als Feder und das Stellglied 18 als durch einen Magnetsteller gebildeter Kraftsteller ausgebildet ist. In dieser Kombination für die Gestaltung des Stellelementes 16 erweist es sich als zweckmäßig, wie in der Zeichnung dargestellt, wenn die Stellglieder 17 und 18 den Kolben 11 parallel geschaltet beaufschlagen.

Grundsätzlich ist es im Rahmen der Erfindung aber auch möglich, eine Hintereinanderschaltung der Stellglieder vorzusehen, wobei sich eine solche Hintereinanderschaltung insbesondere dann als vorteilhaft erweist, wenn das Stellglied 18 als Wegsteller, so beispielsweise als Spindelsteller ausgebildet ist, was in der Zeichnung nicht gezeigt ist.

Bezogen auf die gezeigte Darstellung mit Parallelschaltung der Stellglieder 17 und 18 des Stellelementes 16 und Ausbildung des Stellgliedes 18 als Magnetsteller entspricht die Grundkonfiguration der Ablaufdrossel 10 einem 3-Wege-Stromregelventil, bei dem über die Feder als Stellglied 17 die Druckdifferenz abgeglichen wird, die sich an der Messdrossel 12 einstellt.

Wird die Messdrossel 12 erfindungsgemäß als Blende mit verhältnismäßig großem freien Durchtrittsquerschnitt ausgebildet, so lassen sich diese Verluste wesentlich reduzieren. Die volumenstromverändernde Ansteuerung des Stromregelventiles erfolgt dann erfindungsgemäß durch die unmittelbare Ansteuerung der Ablaufdrossel 10 über das Stellelement 16 und dessen Beaufschlagung des als Druckwaage dienenden Kolbens 11 über das Stellglied 18.

Die Ansteuerung des Stellgliedes 18 ist schematisch über das Steuergerät 19 angedeutet, in dem bezogen auf die als Festdrossel ausgebildete Messdrossel 12 der der Druckdifferenz zwischen zulaufseitig und ablaufseitig zur Messdrossel 12 gegebenem Druck entsprechende Volumenstrom als Ausgangswert Q ermittelt wird, oder kennlinienmäßig erfasst ist, so dass durch Beeinflussung der Ablaufdrossel 10 der über die Drossel 12 laufende Volumenstrom auf einen Sollwert *Q*_{*Soll*} entsprechend den bezogen auf die Servounterstützung gegebenen Bedürfnissen angepasst werden kann. Die Anpassung erfolgt bestromungsabhängig, durch Zuordnung einer jeweiligen Bestromung zum jeweiligen Volumenstrom. Die Zuordnung kann rechnerisch erfolgen oder auf Basis von Kennlinienfeldern, in denen die Volumenströme differenzdruckabhängig und bestromungsabhängig erfasst sind.

Die Erfindung kann sowohl in Verbindung mit Servopumpen, die als Konstantpumpen ausgebildet sind, wie auch Servopumpen, die als Verstellpumpen arbeiten, eingesetzt werden. Besonders in Verbindung mit Konstantpumpen kommt dem Gedanken, Messdrosseln 12 mit verhältnismäßig großem freien Durchtrittsquerschnitt, gegebenenfalls als Blenden ausgebildet, einzusetzen, im Hinblick auf die angestrebte Energieeinsparung Bedeutung zu, wenn die Pumpen motordrehzahlabhängig betrieben werden, da im Regelfall bei hohen Drehzahlen der Brennkraftmaschine des Fahrzeuges nur eine geringe Servounterstützung gefordert oder erwünscht ist. Mit der Drehzahl steigt aber das Fördervolumen.

Eine zweckmäßige Weiterbildung der Erfindung liegt deshalb auch in der Verwendung von Verstellpumpen, also Pumpen, bei denen das nutzbare Hubvolumen, beispielsweise durch eine bekannte hydraulische Hubringverstellung, veränderlich ist, womit die Möglichkeit eröffnet wird, von der Antriebsdrehzahl abhängige Veränderungen der Fördermenge mehr oder minder abzugleichen. Die Verwendung einer Ablaufdrossel in der Ausgestaltung als Druckwaage bietet, wie nachstehend genannte Fig. 2 bis 4 erläutern, einen günstigen Ansatz, mit geringem Aufwand die Verstellpumpe in ihrem Fördervolumen bedarfsgerecht zu steuern. In der Erläuterung der Fig.. 2 bis 4 finden, soweit funktionell entsprechend, gleiche Bezugszeichen wie in Fig. 1 Verwendung.

Abweichend von Fig. 1 ist die Servopumpe in ihrer Ausbildung als Verstellpumpe 20 bezeichnet, wobei über die Feder 21 veranschaulicht ist, dass die Verstellpumpe 20 auf eine Ausgangslage belastet ist, in der der geförderte Volumenstrom einem Ausgangswert *Q*_{*Soll*} entspricht, wie er vom Steuergerät 19 über den Magnetsteller 18 als Stellglied vorgegeben ist. Aus dieser Ausgangslage kann die Verstellpumpe 20 durch hydraulische Verstellung des nicht dargestellten Hubringes verstellt werden. Die hydraulische Ansteuerung der Verstellpumpe 20 erfolgt über Steuerleitungen 22 und 23, die an die als Druckwaage ausgebildete Abflussdrossel 24 angeschlossen sind, die einen Steuerschieber 25 aufweist, der eine zwischen zwei Steuerkolben 26, 27 liegende Ringnut 28 aufweist.

In der Darstellung gemäß Fig. 2 sind die Steuerleitungen 22 und 23 bezüglich ihrer Anschlüsse an die Abflussdrossel 24 von den Steuerkolben 26, 27 überdeckt.

Fig. 3 veranschaulicht eine Situation, in der der von der Verstellpumpe 20 geförderte Volumenstrom *Q*_{*Ist*} kleiner als ein über das Steuergerät 19 vorgegebener Volumenstrom *Q*_{*Soll*} ist. Die Verstellpumpe 20 muss dementsprechend auf regeln, wobei über den Steuerschieber 25 die Verbindung zwischen dem mit der Rücklaufleitung 6 verbundenen Leitungsabschnitt 9 und der Steuerleitung 22 hergestellt wird, so dass die Steuerleitung 22 unter Niederdruck steht, während die Steuerleitung 23 über die Leitung 13 stromauf der Messdrossel 12 an die Vorlaufleitung 5 angeschlossen ist und somit unter Hochdruck steht, so dass die Verstellpumpe 20 bezüglich ihres Hubringes verstellt wird, bis sich über die Druckwaage ein Gleichgewichtszustand einstellt, wie er in Fig. 2 veranschaulicht ist.

Fig. 4 zeigt eine gegenteilige Situation, der über die Verstellpumpe 20 geförderte Volumenstrom *Q*_{*Ist*} ist größer als der über das Steuergerät 19 vorgegebene Volumenstrom *Q*_{*Soll*}. Dementsprechend muss die Verstellpumpe 20 abregeln, wozu der Steuerschieber 25 eine Lage gemäß Fig. 4 einnimmt, in der die Steuerleitung 22 mit der Hochdruckseite und die Steuerleitung 23 mit der Niederdruckseite verbunden ist. Über den Steuerkolben 26 ist hierzu die Verbindung zwischen dem stromauf der Ablaufdrossel 12 von der Vorlaufleitung 5 abzweigender Leitungsabschnitt 8 und der Steuerleitung 22 freigegeben, während über den Ringraum 28 die Steuerleitung 23 unter Vermittlung des Leitungsabschnittes 9 an die Rücklaufleitung 6 angeschlossen ist, so dass die hydraulische Beaufschlagung des Hubringes in der Stelllage des Steuerschiebers 25 gemäß Fig. 4 entgegengesetzt zur Situation gemäß Fig. 3 ist.

Der Steuerungsaufwand für die Verstellpumpe 20 ist bei dieser erfindungsgemäßen Lösung minimiert und es lässt sich somit mit vergleichsweise geringem Aufwand ein großes Energiesparpotential realisieren.

Insgesamt wird somit für ein Servolenksystem von Fahrzeugen, insbesondere Personenkraftwagen, die Ausbildung des Hydraulikkreises 1 mit einer Servopumpe 2 bzw. 20 mit im Übergang von der Pumpe 2 bzw. 20 auf den Servosteller 4 liegendem 3-Wege-Stromregelventil vorgesehen, das eine im Zulauf auf den Servosteller 4 liegende Messdrossel 12 als Festdrossel und eine im Bypass hierzu liegende Ablaufdrossel 10 bzw. 24 aufweist, die über einen als Druckwaage wechselseitig beaufschlagten Kolben 11 bzw. Schieber 24 einen variablen Drosselquerschnitt bestimmt, so dass der Kolben 11 bzw. Schieber 24, über ein aktives Stellglied beaufschlagt, den Ablaufdrosselquerschnitt zur Veränderung des über die Messdrossel 12 laufenden Volumenstromes bestromungsabhängig verändert, wobei bei Ausgestaltung eines derartigen Servolenksystems 1 mit einer Servopumpe 20 als Verstellpumpe über den Steuerschieber 25 der Druckwaage auch die Verstellpumpe 20 angesteuert werden kann, was zur Vereinfachung des Systems beiträgt.

## Patentansprüche

1. Servolenksystem für Fahrzeuge, insbesondere Personenkraftwagen, mit auf einen hydraulischen Servosteller fördernder Pumpe sowie im Übergang von der Pumpe auf den Servosteller liegendem 3-Wege-Stromregelventil, das eine im Zulauf auf den Servosteller liegende Messdrossel und eine im Bypass hierzu liegende Ablaufdrossel aufweist, über die der Überschussstrom der Pumpe abgezweigt wird und deren variabler Drosselquerschnitt über einen Kolben als Druckwaage bestimmt ist, die - bezogen auf den über die Messdrossel laufenden Volumenstrom - durch Anschluss an die Zulaufseite und, in Gegenrichtung hierzu, durch Anschluss an die Ablaufseite und durch ein Stellelement beaufschlagt ist, das einen von Stellkraft und Gegenkraft abhängigen Stellweg aufweist,
**dadurch gekennzeichnet,**
**dass** als Messdrossel (12) eine Festdrossel vorgesehen ist und dass das Stellelement (16) in seiner Stellkraft volumenstromvariierend aktiv veränderlich ist.

2. Servolenksystem nach Anspruch 1,
**dadurch gekennzeichnet,**
**dass** das Stellelement (16) ein bestromungsabhängig verstellbares Stellglied (18) umfasst.

3. Servolenksystem nach Anspruch 2,
**dadurch gekennzeichnet,**
**dass** als bestromungsabhängig verstellbares Stellglied (18) ein Kraftsteller vorgesehen ist.

4. Servolenksystem nach Anspruch 2,
**dadurch gekennzeichnet,**
**dass** als bestromungsabhängig verstellbares Stellglied (18) ein Wegsteller vorgesehen ist.

5. Servolenksystem nach Anspruch 2 oder 3,
**dadurch gekennzeichnet, dass** das Stellglied (18) durch einen Magnetsteller gebildet ist.

6. Servolenksystem nach Anspruch 4,
**dadurch gekennzeichnet, dass** das Stellglied (18) durch einen Spindelsteller gebildet ist.

7. Servolenksystem nach einem der vorhergehenden Ansprüche,
**dadurch gekennzeichnet,**
**dass** das Stellelement (16) ein elastisches Stellglied (17) umfasst.

8. Servolenksystem nach Anspruch 7,
**dadurch gekennzeichnet,**
**dass** das elastische Stellglied (17) durch eine Feder gebildet ist.

9. Servolenksystem nach einem der vorhergehenden Ansprüche,
**dadurch gekennzeichnet,**
**dass** die Stellglieder (17, 18) des Stellelementes (16) in Parallelschaltung zum Kolben (11) angeordnet sind.

10. Servolenksystem nach einem der Ansprüche 1 bis 8,
**dadurch gekennzeichnet,**
**dass** die Stellglieder (17, 18) des Stellelementes (16) in Reihenschaltung zum Kolben (11) angeordnet sind.

11. Servolenksystem nach Anspruch 9,
**dadurch gekennzeichnet,**
**dass** bei Parallelschaltung der Stellglieder (17, 18) diese durch einen Kraftsteller und eine Feder gebildet sind.

12. Servolenksystem nach Anspruch 10,
**dadurch gekennzeichnet,**
**dass** bei Reihenschaltung der Stellglieder (17, 18) diese durch einen Wegsteller und eine Feder gebildet sind.

13. Servolenksystem nach einem der vorhergehenden Ansprüche,
**dadurch gekennzeichnet,**
**dass** die Servopumpe als Konstantpumpe (2) ausgebildet ist.

14. Servolenksystem nach einem der Ansprüche 1 bis 12,
**dadurch gekennzeichnet,**
**dass** die Servopumpe als Verstellpumpe (20) ausgebildet ist.

15. Servolenksystem nach Anspruch 14,
**dadurch gekennzeichnet,**
**dass** die Verstellpumpe (20) über die als Druckwaage ausgebildete Abflussdrossel (24) angesteuert ist.

16. Servolenksystem nach Anspruch 15,
**dadurch gekennzeichnet,**
**dass** die Verstellpumpe (20) auf eine einer Gleichgewichtslage der Druckwaage (Abflussdrossel 24) entsprechende Ausgangslage federbelastet ist und entsprechend der Verstellung der Druckwaage (Abflussdrossel 24) auf eine dem jeweilig geforderten Volumenstrom *Q*_{*Soll*} entsprechende, einer Gleichgewichtslage der Druckwaage (Abflussdrossel 24) zugeordnete Arbeitslage einzustellen ist.

## Claims

1. Power assisted steering system for vehicles, in particular passenger cars, having a pump which feeds to a hydraulic servo actuator and a three-way flow regulator valve which is located at the junction between the pump and the servo actuator, which has a measuring throttle in the inflow to the servo actuator and an outflow throttle which is located in the bypass of the latter and via which the excess flow of the pump is branched off and its variable throttle cross section is determined by means of a piston as a pressure compensator which - with respect to the volume flow which passes via the measuring throttle - is charged by connection to the inflow side and, in the opposite direction thereto, by connection to the outflow side and by an actuating element which has an actuating path which is dependent on the actuating force and opposing force, **characterized in that** a fixed throttle is provided as measuring throttle (12) and **in that** the actuating element (16) has actively variable actuating force with the effect of varying the volume flow.

2. Power assisted steering system according to Claim 1, **characterized in that** the actuating element (16) comprises an actuating member (18) which can be adjusted as a function of the current applied.

3. Power assisted steering system according to Claim 2, **characterized in that** a force actuator is provided as the actuating member (18) which can be adjusted as a function of the current applied.

4. Power assisted steering system according to Claim 2, **characterized in that** a flow-dividing actuator is provided as actuator member (18) which can be adjusted as a function of the current applied.

5. Power assisted steering system according to Claim 2 or 3, **characterized in that** the actuator member (18) is formed by a magnet actuator.

6. Power assisted steering system according to Claim 4, **characterized in that** the actuator member (18) is formed by a spindle actuator.

7. Power assisted steering system according to one of the preceding claims, **characterized in that** the actuator element (16) comprises an elastic actuator member (17).

8. Power assisted steering system according to Claim 7, **characterized in that** the elastic actuator member (17) is formed by a spring.

9. Power assisted steering system according to one of the preceding claims, **characterized in that** the actuator members (17, 18) of the actuator element (16) are arranged in a parallel connection to the piston (11).

10. Power assisted steering system according to one of claims 1 to 9, **characterized in that** the actuator members (17, 18) of the actuator element (16) are arranged in a series connection to the piston (11).

11. Power assisted steering system according to Claim 9, **characterized in that**, when there is a parallel connection of the actuator members (17, 18), they are formed by a force actuator and a spring.

12. Power assisted steering system according to Claim 10, **characterized in that**, when there is a series connection of the actuator members (17, 18), these are formed by a flow-dividing actuator and a spring.

13. Power assisted steering system according to one of the preceding claims, **characterized in that** the servopump is embodied as a constant delivery pump (2).

14. Power assisted steering system according to one of Claims 1 to 12, **characterized in that** the servopump is embodied as an adjustable pump (20).

15. Power assisted steering system according to Claim 14, **characterized in that** the adjustable pump (20) is actuated by means of the outflow throttle (24) which is embodied as a pressure compensator.

16. Power assisted steering system according to Claim 15, **characterized in that** the adjustable pump (20) is spring-loaded to an outlet position which corresponds to an equilibrium position of the pressure compensator (outflow throttle 24) and can be set, in accordance with the adjustment of the pressure compensator (outflow throttle 24), to a working position which corresponds to the respectively required volume flow *Q*_{*setp*} and is assigned to an equilibrium position of the pressure compensator (outflow throttle 24).

## Revendications

1. Système de direction assistée pour véhicules, notamment pour véhicules de tourisme, comprenant une pompe refoulant sur un servopositionneur ainsi qu'un régulateur de débit à 3 voies qui se trouve dans la transition entre la pompe et le servopositionneur, lequel présente un obturateur de mesure qui se trouve dans l'arrivée vers le servopositionneur et un obturateur d'évacuation en dérivation avec celui-ci par le biais duquel le courant excédentaire de la pompe est dérivé et dont la section d'obturation variable est déterminée par un piston faisant office de balance de pression qui, par rapport au débit volumique qui passe par l'obturateur de mesure, est sollicité par un raccordement au côté arrivée et, dans le sens inverse, par un raccordement au côté évacuation et par un élément de positionnement, lequel présente une course de positionnement qui dépend de la force de positionnement et de la force opposée, **caractérisé en ce qu'**il est prévu un obturateur fixe comme obturateur de mesure (12) et que la force de positionnement de l'élément de positionnement (16) peut être modifiée de manière active en faisant varier le débit volumique.

2. Système de direction assistée selon la revendication 1, **caractérisé en ce que** l'élément de positionnement (16) comprend un organe de positionnement réglable en fonction du courant qui le traverse (18).

3. Système de direction assistée selon la revendication 2, **caractérisé en ce que** l'organe de positionnement réglable en fonction du courant qui le traverse (18) prévu est un positionneur à force.

4. Système de direction assistée selon la revendication 2, **caractérisé en ce que** l'organe de positionnement réglable en fonction du courant qui le traverse (18) prévu est un positionneur à course.

5. Système de direction assistée selon la revendication 2 ou 3, **caractérisé en ce que** l'organe de positionnement (18) est réalisé par un positionneur électromagnétique.

6. Système de direction assistée selon la revendication 4, **caractérisé en ce que** l'organe de positionnement (18) est réalisé par un positionneur à broche.

7. Système de direction assistée selon l'une des revendications précédentes, **caractérisé en ce que** l'élément de positionnement (16) comprend un organe de positionnement élastique (17).

8. Système de direction assistée selon la revendication 7, **caractérisé en ce que** l'organe de positionnement élastique (17) est formé par un ressort.

9. Système de direction assistée selon l'une des revendications précédentes, **caractérisé en ce que** les organes de positionnement (17, 18) de l'élément de positionnement (16) sont disposés dans un circuit parallèle par rapport au piston (11).

10. Système de direction assistée selon l'une des revendications 1 à 8, **caractérisé en ce que** les organes de positionnement (17, 18) de l'élément de positionnement (16) sont disposés dans un circuit en série par rapport au piston (11).

11. Système de direction assistée selon la revendication 9, **caractérisé en ce que** dans le cas d'un branchement en parallèle des organes de positionnement (17, 18), ceux-ci sont formés par un positionneur à force et un ressort.

12. Système de direction assistée selon la revendication 10, **caractérisé en ce que** dans le cas d'un branchement en série des organes de positionnement (17, 18), ceux-ci sont formés par un positionneur à course et un ressort.

13. Système de direction assistée selon l'une des revendications précédentes, **caractérisé en ce que** la pompe d'asservissement est réalisée sous la forme d'une pompe à cylindrée constante (2).

14. Système de direction assistée selon l'une des revendications 1 à 12, **caractérisé en ce que** la pompe d'asservissement est réalisée sous la forme d'une pompe à cylindrée variable (20).

15. Système de direction assistée selon la revendication 14, **caractérisé en ce que** la pompe à cylindrée variable (20) est commandée par le biais de l'obturateur d'évacuation (24) réalisé sous la forme d'une balance de pression.

16. Système de direction assistée selon la revendication 15, **caractérisé en ce que** la pompe à cylindrée variable (20) est soumise à la contrainte d'un ressort dans une position initiale correspondant à une position d'équilibre de la balance de pression (obturateur d'évacuation 24) et, conformément au positionnement de la balance de pression (obturateur d'évacuation 24), doit être réglée sur une position de travail associée à une position d'équilibre de la balance de pression (obturateur d'évacuation 24) et correspondant au débit volumique Q_{Soll} à chaque fois refoulé.
